# EUROPÄISCHE PATENTSCHRIFT

(11) **EP 4 043 870 B1**
(45) Veröffentlichungstag und Bekanntmachung des Hinweises auf die Patenterteilung: **14.08.2024**
(21) Anmeldenummer: 21157466.0
(22) Anmeldetag: 16.02.2021
(51) Int. Cl.: G01N 21/94, H02S 50/00

(54) **VORRICHTUNG UND VERFAHREN ZUR ERMITTLUNG DES VERSCHMUTZUNGSGRADES EINER OBERFLÄCHE EINES SOLARMODULS**
DEVICE AND METHOD FOR DETERMINING THE DEGREE OF SOILING OF A SURFACE OF A SOLAR MODULE
DISPOSITIF ET PROCÉDÉ DE DÉTERMINATION DU DEGRÉ DE POLLUTION D'UNE SURFACE D'UN MODULE SOLAIRE

(43) Veröffentlichungstag der Anmeldung: 17.08.2022
(73) Patentinhaber: sun-X GmbH, 85447 Fraunberg (DE)
(72) Erfinder: LIEBOLD, Pascal, 84034 Landshut (DE); ELMAN, Vladimir, 84028 Landshut (DE)
(74) Vertreter: von Tietzen und Hennig, Nikolaus

(56) Entgegenhaltungen:
- WO-A1-2020/170389
- DE-A1- 102019 001 571

## Beschreibung

Vorliegende Erfindung betrifft eine Vorrichtung und ein Verfahren zur Ermittlung des Verschmutzungsgrades einer Oberfläche eines insbesondere opaken Solarmoduls, und insbesondere zur Ermittlung von Staub- und Schmutzablagerungen auf der Oberfläche des Solarmoduls.

Vorgenannte Staub- und Schmutzablagerungen auf der Oberfläche von Solarmodulen, wobei unter dem Begriff Solarmodul im Umfang der Erfindung sämtliche Arten solaraktiver Module, also auch Photovoltaikmodule etc., mitumfasst sind, wirken sich negativ auf den Wirkungsgrad solcher Solarmodulanlagen aus. Ein rechtzeitiges Erkennen beginnender oder vorliegender Verschmutzungen, würde sich positiv auf die Wirtschaftlichkeit von Solaranlagen auswirken und deren Ertrag optimieren. So wäre beispielsweise eine Reinigung der Solarmodule immer dann durchzuführen, wenn ein bestimmter Verschmutzungsgrad detektiert wurde. Eine Detektion basierend auf einem Absinken des Ertrages, ist aufgrund schwankender Umgebungsbedingungen, wie der Sonneneinstrahlung, der Jahreszeit etc. nicht zielführend.

Aus dem Stand der Technik sind Detektionsverfahren bekannt, bei denen über Handgeräte der Verschmutzungsgrad einer Solaranlage optisch detektierbar ist. Darüber hinaus sind Anlagen bekannt, bei denen über separat vom Solarmodul aufgestellte Detektionsfelder, im Durchlichtverfahren, eine Verschmutzung detektiert und ausgehend von dieser, auf die Verschmutzung des Solarmoduls geschlossen werden soll. Der Nachteil all dieser Lösungen besteht darin, dass damit entweder keine kontinuierliche und somit auch zuverlässige Messung möglich ist. Bei einer Messung über Externe Detektionsfelder, kann es, aufgrund unterschiedlicher Oberflächenbeschaffenheit des Moduls und des Detektionsfeldes bei gleichen Umwelteinflüssen zu unterschiedlichen Verschmutzungen kommen, was die Detektion verfälscht. Zudem ist die Verwendung von Durchlichtverfahren und Verfahren, die auf die Detektion transluzenter Oberflächen gerichtet sind, bei den eingangs genannten Solarmodulen nicht oder nur uneffektiv anwendbar.

Als problematisch hat sich bei aus dem Stand der Technik bekannten Anlagen zudem die Verschattung herausgestellt, die durch Mess- und Detektionseinrichtungen auf dem Solarmodul hervorgerufen wird, und so nicht nur die Messergebnisse, insbesondere in Abhängigkeit des Sonnenverlaufs, sondern auch den Ertrag der Anlagen negativ beeinflusst.

Insbesondere in diesem Zusammenhang ist die DE 10 2019 001 571 A1 zu nennen. Sie offenbart eine Oberflächen-Reinigungs-Vorrichtung für ein Solarmodul, die eine Detektionsvorrichtung, bestehend aus Vibrationselementen und einer Sensoreinheit, aufweist, und die in der Lage ist, den Verschmutzungsgrad der Oberfläche des Solarmoduls zu ermitteln. Die Sensoreinrichtung misst dazu den reflektierten Teil einer durch ein Strahlungsmittel emittierten Strahlung. Die DE 10 2019 001 571 A1 lehrt diesbezüglich, Sensoreinrichtung und Strahlungsmittel möglichst orthogonal zu der zu detektierenden Oberfläche auszurichten.

Aufgabe der vorliegenden Erfindung ist es folglich, eine Vorrichtung und ein Verfahren zur Ermittlung des Verschmutzungsgrades einer Oberfläche eines insbesondere opaken Solarmoduls zur Verfügung zu stellen, die eine preiswerte, zuverlässige und kontinuierliche Messung ermöglichen.

Diese Aufgabe wird durch eine Vorrichtung bzw. ein Verfahren gemäß den unabhängigen Ansprüchen gelöst.

Insbesondere wird diese Aufgabe gelöst durch eine Vorrichtung zur Ermittlung des Verschmutzungsgrades einer Oberfläche eines insbesondere opaken Solarmodul, und insbesondere zur Ermittlung von Staub- und Schmutzablagerungen auf der Oberfläche des Solarmoduls, umfassend: ein Strahlungsmittel, ausgebildet, um eine emittierte Strahlung wenigstens einer definierten Wellenlänge auf wenigstens einen Teilbereich der Oberfläche des Solarmoduls zu emittieren, ein Sensormittel, um von diesem Teilbereich reflektierte Strahlung zu detektieren, und ein Auswertemittel, zur Ermittlung des Verschmutzungsgrades des Teilbereichs aus einem Vergleich zwischen der detektierten reflektierten Strahlung und einer, optional vorher detektierten, reflektierten Normstrahlung, wobei die reflektierte Normstrahlung durch das Emittieren einer zur obigen emittierten Strahlung identischen Normstrahlung auf den Teilbereich in wenigstens einem Normzustand des Teilbereiches, insbesondere einem Zustand mit 1%ger geringer erzielbarer Leistung des Solarmoduls und/oder einem nicht verschmutzten Zustand, optional mit 100%er erzielbarer Leistung des Solarmoduls, und der Detektion der dabei resultierenden reflektierten Strahlung ermittelt wird, wobei das Strahlungsmittel und das Sensormittel so ausgebildet sind, dass ein wesentlicher Teil der emittierten Strahlung vom Sensormittel weg auf den Teilbereich der Solarmoduloberfläche gerichtet wird, während die, an den, die Staub- und Schmutzablagerungen maßgeblich verursachenden, auf dem Teilbereich des Solarmoduls abgelagerten Partikel reflektierte Strahlung, auf das Sensormittel zurückgeworfen wird, wobei die durch das Sensormittel zu detektierende reflektierte Strahlung eine Mie-Strahlung ist, und das Sensormittel zur Detektion derselben ausgebildet ist, und , wobei das Strahlungsmittel derart ausgebildet und angeordnet ist, dass die Emissionsachse AE der emittierten Strahlung, in einem Winkel β1 von 2° bis 15°, optional 5° bis 10°, und weiter optional von 6° bis 8°, zur Oberfläche des Solarmoduls geneigt ist, und, dass das Sensormittel derart ausgebildet und angeordnet ist, dass seine Detektionsachse AD in einem Winkel β2 von 2° bis 15°, optional von 5° bis 10°, und weiter optional von 6° bis 8°, zur Oberfläche des Solarmoduls geneigt ist.

Darüber hinaus wird diese Aufgabe gelöst durch ein Verfahren zur Ermittlung des Verschmutzungsgrades einer Oberfläche eines insbesondere opaken Solarmoduls, und insbesondere zur Ermittlung von Staub- und Schmutzablagerungen auf der Oberfläche des Solarmoduls, umfassend die folgenden Schritte: Emittieren einer emittierten Strahlung mit wenigstens einer definierten Wellenlänge auf wenigstens einen Teilbereich der Oberfläche des Solarmoduls mittels eines Strahlungsmittels; Detektieren einer von diesem Teilbereich reflektierten Strahlung mittels eines Sensormittels; und Ermitteln des Verschmutzungsgrades des Teilbereichs aus einem Vergleich zwischen der detektierten reflektierten Strahlung und einer, optional vorher detektierten, reflektierten Normstrahlung, und einer, optional vorher detektierten, reflektierten Normstrahlung, wobei die reflektierte Normstrahlung durch das Emittieren einer zur obigen emittierten Strahlung identischen Normstrahlung auf den Teilbereich in wenigstens einem Normzustand des Teilbereiches, insbesondere einem Zustand mit 1% geringer erzielbarer Leistung des Solarmoduls und/oder einem nicht verschmutzten Zustand mit 100% erzielbarer Leistung des Solarmoduls, und der Detektion der dabei resultierenden reflektierten Strahlung ermittelt wird, und wobei die durch das Sensormittel zu detektierende reflektierte Strahlung eine Mie-Strahlung ist, und das Sensormittel zur Detektion derselben ausgebildet ist, wobei das Strahlungsmittel derart ausgebildet und angeordnet ist, dass die Emissionsachse AE der emittierten Strahlung, in einem Winkel β1 von 2° bis 15°, optional 5° bis 10°, und weiter optional von 6° bis 8°, zur Oberfläche des Solarmoduls geneigt ist, und, dass das Sensormittel derart ausgebildet und angeordnet ist, dass seine Detektionsachse AD in einem Winkel β2 von 2° bis 15°, optional von 5° bis 10°, und weiter optional von 6° bis 8°, zur Oberfläche des Solarmoduls geneigt ist, wobei das Strahlungsmittel und das Sensormittel so ausgebildet sind, dass ein wesentlicher Teil der emittierten Strahlung vom Sensormittel weg auf den Teilbereich der Solarmoduloberfläche gerichtet wird, während die, an den, die Staub- und Schmutzablagerungen maßgeblich verursachenden, auf dem Teilbereich des Solarmoduls abgelagerten Partikel reflektierte Strahlung, auf das Sensormittel zurückgeworfen wird.

Erfindungsgemäß wird also die Detektion des (Real-)Verschmutzungsgrades eines Solarmodules durch einen Vergleich zwischen einer bei Feldmessungen detektierten reflektierten Strahlung und einer als Norm- bzw. Eichstrahlung gewerteten reflektierten Strahlung erreicht. Die reflektierte Normstrahlung kann u.a. im Vorfeld am selben Modul und/oder am selben Teilbereich und/oder am Ort der späteren Verwendung des Solarmoduls ermittelt werden. Optional ist es auch denkbar, die reflektierte Normstrahlung an einem identischen Modul, jedoch an einer anderen Position, beispielsweise an einem benachbarten Modul oder unter Laborbedingungen zu detektieren. Optional ist es auch denkbar, dass der Teilbereich zur Ermittlung der reflektierten Normstrahlungen, in seinen Abmessungen identisch, jedoch an einem örtlich verschieden positionierten Solarmodul detektiert wird. Auch dies kann insbesondere unter Labortestbedingungen erfolgen. Optional erfolgt die Ermittlung der reflektierten Normstrahlung, mittels der Normstrahlung an der Stelle und mit dem Solarmodul, an dem das Solarmodul später aufgestellt und verwendet wird.

Es ist denkbar, die vorgenannten Normungen beispielsweise nach einer Reinigung der Anlage bzw. Solarmodule vorzunehmen, um so einen Referenzwert für die spätere Verschmutzungsdetektion zu generieren.

Es ist denkbar, den Normzustand eines Solarmoduls zur Detektion der reflektierten Normstrahlung, mittels Bestäuben seines Teilbereichs mit einem Prüfstaub, beispielsweise einem zertifizierten Prüfstaub, wie Middle East Dust, herzustellen. In Abhängigkeit der Intensität der reflektierten Normstrahlung kann so eine detektierte reflektierte Normstrahlung korrespondierend zu den vorliegenden Verschmutzungsgraden gewählt werden. So kann beispielsweise bei der Detektion einer 1%igen Leistungsreduktion der korrespondierende Wert der reflektierten Strahlung als reflektierte Normstrahlung definiert und im weiteren Verlauf mit den bei Feldmessungen, insbesondere kontinuierlich ermittelten reflektierten Strahlungen verglichen werden. Auch andere Verschmutzungswerte, korrespondierend insbesondere zum Leistungsverlust des Solarmoduls, können in Verbindung mit den resultierenden reflektierten Strahlungen katalogisiert und so bei der Ermittlung des bei einer Messung tatsächlich zu ermittelnden Verschmutzungsgrades verwendet werden.

Es ist denkbar, die Normung der emittierten und reflektierten Strahlung im Labor vorzunehmen und dann in Feldversuchen durch zusätzliche Kompensationswerte, beispielsweise Solarmodulausrichtung, Wetterbedingungen, Höhe und Feuchtigkeit, zu normieren, um so spezifizierte Normwerte zum Vergleich mit aktuell detektierten Werten und insbesondere reflektierten Strahlungen zu verwenden. Eine Anpassung der reflektierten Normstrahlung an die damit ermittelbare Realverschmutzung des Solarmoduls kann zudem kontinuierlich angepasst und so die Detektion verbessert werden.

Optional werden die Normwerte und insbesondere der bzw. die Werte der reflektierten Normstrahlung extern gespeichert, das heißt also räumlich von dem zu überwachenden Solarmodul entfernt. Das Auswertemittel ist optional örtlich vom Solarmodul und/oder dem Sensormittel und/oder dem Strahlungsmittel getrennt. Beispielsweise kann das Auswertemittel in einem Serverzentrum oder dergleichen Rechenzentrum angeordnet sein, um dort Auswertungen der detektierten Strahlungen zu ermöglichen. Optional ist insbesondere dazu ein Übertragungs- und/oder Empfangsmittel vorgesehen, beispielsweise umfassend ein GSM-Mittel, um den Wert der detektierten Strahlung an das Auswertemittel zu übertragen.

Optional ist es auch möglich, Normwerte und insbesondere für den Vergleich zwischen detektierter Strahlung und detektierter Normstrahlung lokale Auswertemittel, insbesondere mit Speichereinheiten, vorzusehen.

Erfindungsgemäß ist, wie erwähnt, das Sensormittel zur Detektion einer Mie-Strahlung ausgerichtet. Auf diese Weise sind erhebliche Vorteile der Vorrichtung und auch des beschriebenen Verfahrens erreichbar. Dies gilt insbesondere für eine Ausführungsform, bei der die Wellenlänge, optional die Bandbreite der Wellenlänge der emittierten Strahlung, im Wesentlichen dem Durchmesser der zu erwartenden Staub- und Schmutzablagerungen maßgeblich verursachenden, auf dem Teilbereich des Solarmoduls abgelagerten Partikel entspricht bzw. dahingehend adaptiert wird, und optional in einem Bereich um 20 %, weiter optional um 10 % größer oder kleiner ist. Wie im Folgenden noch im Detail erwähnt, sind in diesem Zusammenhang optional Strahlungsmittel verwendbar, die ein Frequenzband bzw. einen Wellenlängenbereich zwischen 600 nm und 1.100 nm, insbesondere 620 nm bis 1.050 nm, abdecken.

Optional ist ein Montagemittel an der Vorrichtung vorgesehen oder befestigbar, über das die Vorrichtung optional seitlich an einem Solarmodul, optional oberhalb und/oder außerhalb einer solarenergetisch aktiven Flächen, und weiter optional seitlich an einem Rahmen des Solarmoduls, anordbar ist. Optional ist die Vorrichtung mit einem Modul über branchenübliche Klemmen für den Aufbau von Solarmodulanlagen, am Solarmodul befestigbar ausgebildet. Es ist auch denkbar, am Solarmodul ein Montagesystem vorzusehen, an dem die Vorrichtung befestigbar und insbesondere aufsteckbar ist. Auf diese Weise ist es möglich, die Vorrichtung möglichst aus einem Verschattungsbereich des Solarmoduls heraus zu positionieren, um unnötige Verschattungen über einen großen Tagesverlauf hin zu gewährleisten. Die erfindungsgemäße Bauweise der Vorrichtung ermöglicht dies, wie dies im Folgenden noch erläutert wird.

Die Vorrichtung ist optional außerhalb des vertikalen Projektionsbereichs des Solarmoduls und insbesondere seiner solarenergetisch aktiven Fläche anordbar. Dazu ist optional beispielsweise ein Modulsystem vorgesehen, über das die Vorrichtung seitlich am Solarmodul befestigbar, insbesondere anschraubbar, festklemmbar oder dergleichen befestigbar ist. Optional ist eine Positionierung an unterschiedlichen Stellen am Solarmodul möglich, um, in Abhängigkeit der Montageposition des Solarmoduls, den optimalen Detektionsbereich bzw. Teilbereich festzulegen. Optional ist die Vorrichtung insbesondere gegen ein Entfernen durch einen unberechtigten Benutzer gesichert positionierbar. Optional sind das Strahlungsmittel und das Sensormittel in einem gemeinsamen Gehäuse angeordnet. Eine solche Konstruktion liefert insbesondere aufgrund der Ausbildung des Sensormittels mit seiner Detektionsfähigkeit im Bereich der Mie-Strahlung der zu detektierenden Partikel, zuverlässige Messergebnisse in Kombination mit Platzsparender, kleiner Bauweise und dadurch resultierender geringer oder gar keiner Verschattung.

Erfindungsgemäß ist die Vorrichtung so ausgebildet, dass eine Rückstrahlung, also eine rückwärtige Reflexion der emittierten Strahlung detektiert wird. Erfindungsgemäß sind das Strahlungsmittel und das Sensormittel so ausgebildet, dass ein wesentlicher Teil der emittierten Strahlung vom Sensormittel weg auf den Teilbereich gerichtet wird, während der an den Schmutzpartikeln reflektierte Teil, also die reflektierte Strahlung auf das Sensormittel zurückgeworfen wird.

Wie erwähnt ist das Strahlungsmittel derart ausgebildet und angeordnet, dass die Emissionsachse A_{E} der emittierten Strahlung, in einem Winkel β1 von 2° bis 15°, optional 5° bis 10°, und weiter optional von 6° bis 8°, zur Oberfläche des Solarmoduls geneigt ist, und optional auf den Teilbereich auftrifft. Zudem ist der Sensor derart ausgebildet und angeordnet, dass seine Detektionsachse A_{D} in einem Winkel β₂ von 2° bis 15°, optional von 5° bis 10°, und weiter optional von 6° bis 8°, zur Oberfläche des Solarmoduls geneigt ist.

Das Resultat der erfindungsgemäßen Ausbildung der Vorrichtung ist u.a. eine, in ihrer Bauhöhe sehr flache Konstruktion, die eine optimale Anordnung, und insbesondere nahezu keine Verschattung verursachende Anordnung relativ zur detektierenden Solarmodulfläche erlaubt. Insbesondere in Kombination mit der Anordnung außerhalb der Projektionsebene, also beispielsweise seitlich an einem Rahmen oder außerhalb dieses Rahmens des Solarmoduls, ergibt sich eine Vorrichtung, die eine zuverlässige Detektion bei minimaler, wenn nicht sogar völlig ausbleibender Verschattung ermöglicht.

Die Detektionsachsen und Reflexionsachsen von Strahlungsmittel und Sensormittel können, in Bezug auf ihre Winkel β₁ und β₂, unterschiedlich geneigt sein. Optional ist das Strahlungsmittel derart ausgebildet, dass es die emittierte Strahlung in Form eines Emissionskegels emittiert, und/oder das Sensormittel derart ausgebildet ist, dass es die reflektierte Strahlung innerhalb eines Detektionskegels detektiert. Optional handelt es sich also beim Strahlungsmittel und/oder Sensormittel um einen Kegelstrahler bzw. -empfänger und nicht um einen Flächenstrahler bzw. -empfänger.

Optional sind das Strahlungsmittel und das Sensormittel relativ zueinander unter Bildung eines Überlappungsbereichs der emittierten Strahlung und der reflektierenden Strahlung im Teilbereich ausgebildet und angeordnet. Weiter optional ist es denkbar, dass die Emissionsachse A_{E} des Strahlungsmittels in einem Winkel α von 10° bis 20°, optional 13° bis 17°, zur Detektionsachse A_{D} des Sensormittels geneigt ist, sodass sich der zuvor genannte Überlappungsbereich im Teilbereich bildet. Der Überlappungsbereich kann sich auch über den Teilbereich hinaus erstrecken, wird optional dann aber nicht zur Detektion der reflektierten Strahlung verwendet.

Optional sind das Strahlungsmittel und/oder das Sensormittel derart ausgebildet oder angeordnet, dass sich der Teilbereich in einer maximalen Entfernung E_{Max} von 30 cm, optional 20 cm, weiter optional 16 cm, und einer minimalen Entfernung E_{Min} von 2 cm, optional 10 cm, weiter optional 14 cm, vom Strahlungsmittel und/oder Sensormittel erstreckt. Dieser minimale und maximale Abstand hat sich als besonders zuverlässig für eine genaue Detektion erwiesen.

Optional weist das Gehäuse wenigstens eine für die emittierte Strahlung und die reflektierte Strahlung transluzente Abdeckung auf, wobei optional für die emittierte Strahlung und die reflektierte Strahlung je wenigstens eine, gegenseitig durch ein Teilungsmittel separierte Abdeckung vorgesehen ist. Dies verhindert insbesondere die durch eine Verschmutzung der Abdeckung resultierende Mehrfachstreuung und Reflexion im Abdeckungsmaterial, was zu einem Verfälschen der detektierten Strahlung führen würde. Insbesondere minimiert sich durch diese Ausbildung der Einfluss der Verschmutzung der Abdeckung auf die detektierten Signale.

Optional ist zwischen dem Strahlungsmittel und dem Sensormittel ein die emittierte Strahlung und/oder reflektierte Strahlung blockierendes Trennmittel, optional umfassend wenigstens eine Trennwand, angeordnet. Insbesondere in diesem Zusammenhang ist es denkbar, das Strahlungsmittel und das Sensormittel in voneinander abgetrennten Räumen anzuordnen und insbesondere Räume, die untereinander durch die emittierte Strahlung nicht beeinflusst werden.

Optional ist das Strahlungsmittel derart ausgebildet oder angeordnet, dass die emittierte Strahlung parallel zu einer Längsachse A_{L} des Solarmoduls und/oder senkrecht und/oder orthogonal zu einem auf dem Solarmodul ausgebildeten Streifenmuster auf den Teilbereich auftrifft. Solche Streifenmuster sind bei den meisten Solarmodulen fertigungsbedingt vorhanden. Die erfindungsgemäße Anordnung der Vorrichtung und insbesondere des Strahlungsmittels senkrecht oder orthogonal zu diesem Streifenmuster erhöht die Detektionsgenauigkeit. Selbiges gilt für die Anordnung der Vorrichtung und insbesondere des Strahlungsmittels parallel zu einer Längsachse des Solarmoduls (wobei hier Längsachse jede, insbesondere parallel zur Seitenkante verlaufende, Achse des Solarmoduls sein kann), da hier Fremdreflexionen nachweislich reduziert und so die Detektionsgenauigkeit erhöht wurde. Insbesondere in diesem Zusammenhang gilt, dass die Vorrichtung optional zur Detektion opaker und nicht transluzenter Solarmodule ausgelegt ist.

Optional umfasst das Strahlungsmittel wenigstens eine Strahlungsquelle in Form einer LED und optional eine LED mit einer Maximalstrahldivergenz von 10° und/oder einer Ausgangsleistung von 40 bis 60 mW und/oder wenigstens einer maximalen Betriebstemperatur von 150 °C. Eine solche LED hat sich als besonders effektiv für die Emission der Detektionsstrahlung herausgestellt.

Optional umfasst das Strahlungsmittel wenigstens eine Strahlungsquelle mit wenigstens einer der folgenden Konfigurationen, wobei eine Abweichung um ± 20 %, optional ± 10 %, vorliegen kann:
- 645 nm (HRE-hyper red beam, sichtbarer Wellenlängenbereich, rote Farbe); oder
- 855 nm (NIS-near infrared beam, nah-infraroter Wellenlängenbereich, unsichtbar für Menschen); oder
- 945 nm (MIS-mid infrared beam, mittel-infraroter Wellenlängenbereich, unsichtbar für Menschen).

Optional ist das Sensormittel wenigstens zur optischen Detektion ausgebildet. Optional umfasst es wenigstens eine Fotodiode, optional mit wenigstens einer der folgenden Konfigurationen, wobei auch hier eine Abweichung um ± 20 %, optional ± 10 %, vorliegen kann:
- Sensorfläche 2,65 mm², Empfindlichkeit 0,62 A/W, maximale Empfindlichkeit bei 920 nm; oder
- Sensorfläche 2,65 mm², Empfindlichkeit 0,65 AIW, spektrale Empfindlichkeit nur im Infrarot-Bereich 730 nm bis 1100 nm; maximale Empfindlichkeit bei 880 nm, Tageslicht-Filter.

Optional umfasst das Sensormittel und/oder das Strahlungsmittel eine Optik. Eine solche Optik kann optional wenigstens eine Sammellinse und weiter optional wenigstens eine bikonvexe Linse aufweisen. Insbesondere in Verbindung mit dem Sensormittel, weist die Linse optional eine Fokuslänge von 12 - 22 mm, optional 16 - 18 mm, und/oder eine numerische Apertur von N_{A}= 0,469 bei einem Außendurchmesser von 18 mm auf, wobei eine Abweichung um +/- 10% vorliegen kann.

Wie oben bereits erwähnt, umfasst die Erfindung auch ein Verfahren zur Ermittlung des Verschmutzungsgrades einer Oberfläche eines insbesondere opaken Solarmoduls. Aus Redundanzgründen wird auf dieses Verfahren nicht im Detail eingegangen, sondern auf sämtliche Merkmale, wie sie im Zusammenhang mit der erfindungsgemäßen Vorrichtung erwähnt wurden, verwiesen. All diese Merkmale sind identisch auf das Verfahren anwendbar. Dies gilt natürlich auch umgekehrt.

Weitere Ausführungsformen der Erfindung ergeben sich aus den Unteransprüchen. Im Folgenden wird die Erfindung anhand von Ausführungsbeispielen beschrieben, die in den beiliegenden Figuren näher erläutert sind.

Dabei zeigen schematisch:
- Figs. 1 und 2: eine schematische Darstellung einer Ausführungsform der Vorrichtung, angeordnet an einem Solarmodul;
- Figs. 3 bis 6: isometrische Darstellungen und Teildarstellungen der Vorrichtung gemäß Fig. 1; und
- Figs. 7 bis 9: isometrische Darstellungen der Vorrichtung gemäß Fig. 1 im Betriebszustand.
Im Folgenden werden für gleiche und gleichwirkende Bauteile dieselben Bezugsziffern verwendet, wobei bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

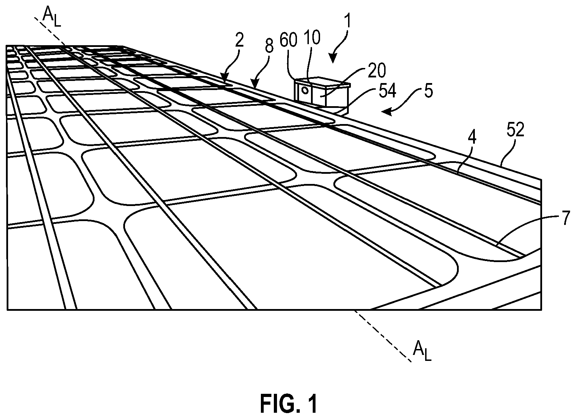

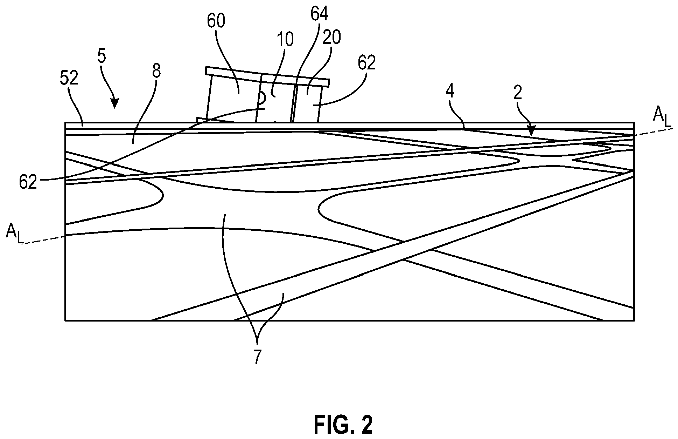

Die Figs. 1 und 2 zeigen in isometrischer Darstellung eine Ausführungsform der erfindungsgemäßen Vorrichtung 1, montiert an einem Solarmodul 4. Wie erwähnt, kann dieses Solarmodul 4 zur Energiegewinnung, Wärmegewinnung oder jeder anderen Art der Energiegewinnung mittels solaraktiver Flächen hergestellt sein. Die Vorrichtung 1 ist optional seitlich 5 an dem Solarmodul angeordnet. Bei dieser Ausführungsform befindet sich am Solarmodul ein Rahmen 52, der das Solarmodul 4 optional im Wesentlichen vollständig umläuft.

Die Vorrichtung 1 ist zur Ermittlung des Verschmutzungsgrades einer Oberfläche 2 des Solarmoduls 4 ausgebildet, das hier optional als opakes Solarmodul ausgebildet ist. Es kann optional eine Glasoberfläche oder dergleichen glatt ausgebildete Oberfläche aufweisen. Solche Verschmutzungen können beispielsweise Staub- und Schmutzablagerungen 8 auf der Oberfläche des Solarmoduls 4 sein.

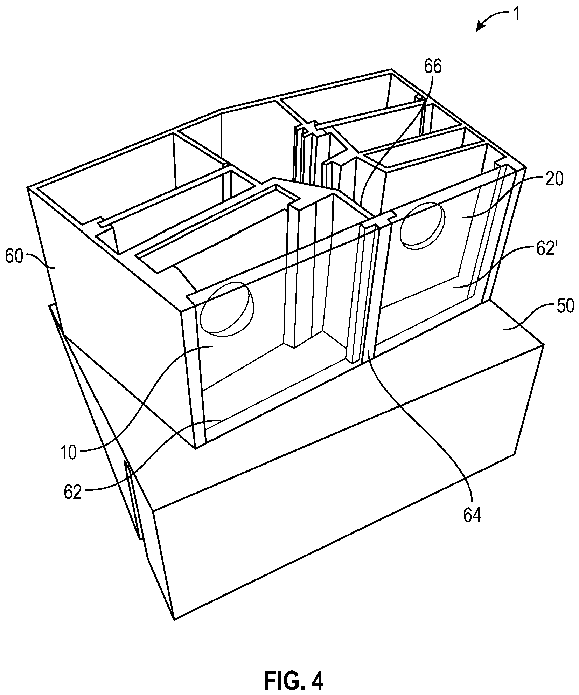

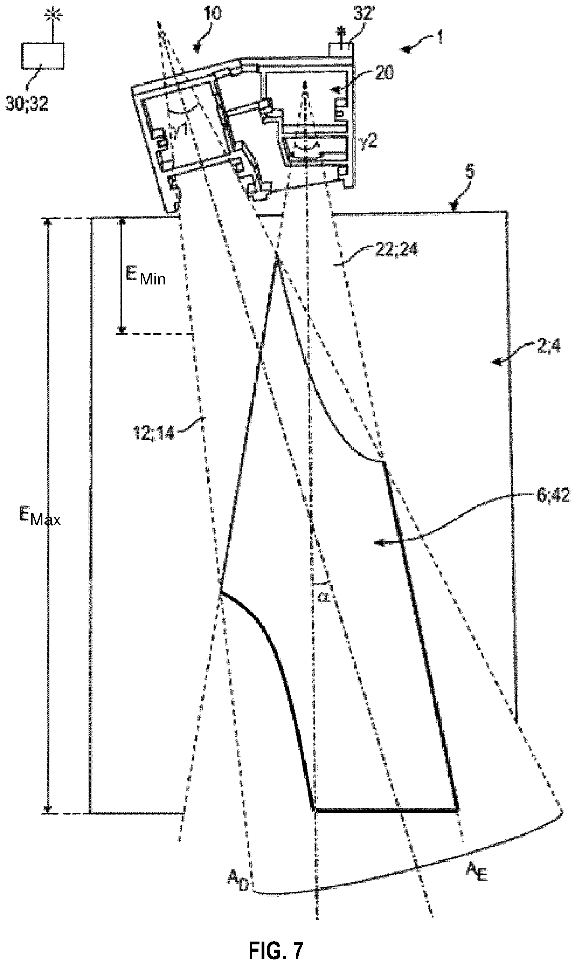

Wie in den Fig. 1 - 4 und 7 - 9 dargestellt, umfasst die Vorrichtung 1 bei dieser Ausführungsform ein Strahlungsmittel 10, ausgebildet um eine emittierte Strahlung 12 wenigstens einer definierten Wellenlänge auf wenigstens einen Teilbereich 6 der Oberfläche des Solarmoduls 4 zu emittieren. Darüber hinaus ist ein Sensormittel 20 vorgesehen, um von diesem Teilbereich 6 reflektierte Strahlung 22 zu detektieren. Eine im Folgenden noch näher erläuterte Visualisierung dieser reflektierten und emittierten Strahlungen 22, 12 findet sich in den Figs. 7 bis 9.

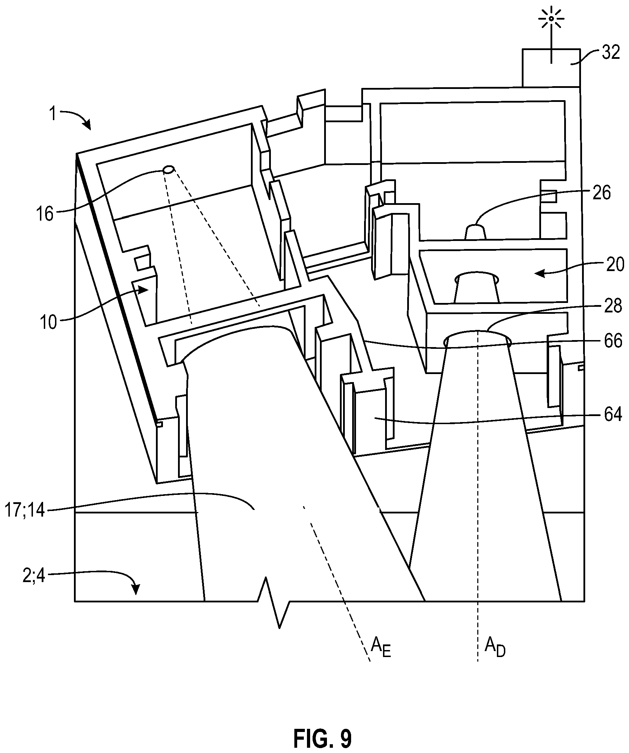

Bei dieser Ausführungsform räumlich getrennt, ist ein Auswertemittel 30 vorhanden (siehe Figs. 7 und 9), das zur Ermittlung des Verschmutzungsgrades des Teilbereichs 6 in Abhängigkeit der reflektierten Strahlung 22 ausgebildet ist. Diese Ermittlung erfolgt aus einem Vergleich zwischen der detektierten reflektierten Strahlung 22 und einer bekannten reflektierten Normstrahlung, die optional vorher, optional an derselben Position, am selben Solarmodul oder aber in einem Labor, ermittelt wurde. Auf die Ermittlung und Detektion dieser Normstrahlung, auf die Eichung der Vorrichtung etc. wurde bereits im einleitenden Teil eingegangen, sodass hier auf diesen Teil verwiesen wird.

Erfindungsgemäß erfolgt die Detektion des Verschmutzungsgrades über die Vorrichtung 1, bei der das Sensormittel 20 derart ausgebildet ist, dass es die reflektierte Strahlung 22, die als Mie-Strahlung ausgebildet ist, detektiert, s dass diese dem Auswertemittel 30 zugeführt werden kann. Dazu ist optional ein Übertragungs- und Empfangsmittel 32 vorgesehen, beispielsweise umfassend ein GSM-Mittel, um den Wert der detektierten Strahlung 22 an das Auswertemittel 30 zu übertragen. Das Auswertemittel 30 ist hier optional vom Solarmodul 4 und dem Sensormittel 20 bzw. dem Strahlungsmittel 10 getrennt. Mit dem

Auswertemittel 30 korrespondierende Mittel, also beispielsweise ein GSM-Sender und/oder -empfänger oder dergleichen Kommunikationsmittel, können an der Vorrichtung 1 oder einem anderen Teilbereich des Solarmoduls bzw. in dessen Umgebung angeordnet sein. Die Kommunikation erfolgt optional drahtlos und/oder kabelgebunden.

Die zuvor erwähnte emittierte Strahlung 12 umfasst optional Wellenlängen, die im Wesentlichen dem Durchmesser der zu erwartenden Staub- und Schmutzablagerungen maßgeblich verursachenden, auf dem Teilbereich 6 des Solarmoduls 4 abgelagerten Partikel entsprechen. Optional kann die Wellenlänge bzw. der Bereich um ± 20 %, weniger optional um ± 10 %, von diesen Werten abweichen, also größer und/oder kleiner sein.

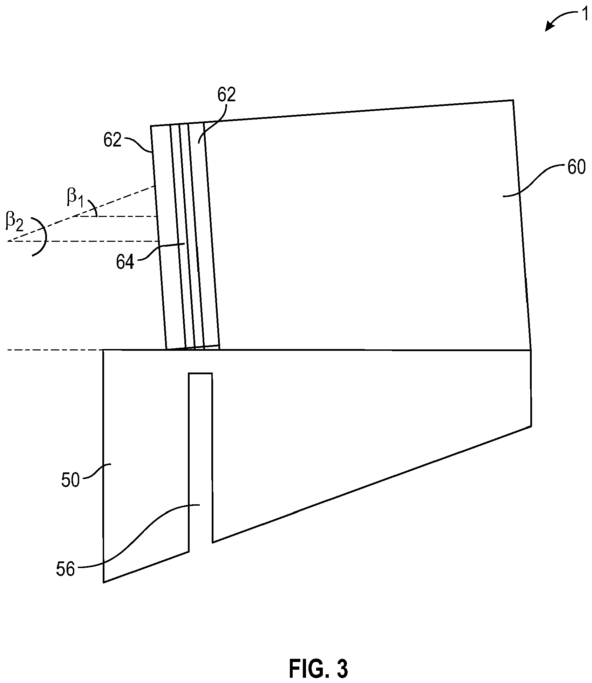

Wie u.a. in den Figs. 3 bis 6 dargestellt, umfasst die Vorrichtung optional ein Gehäuse 60, in dem das Strahlungsmittel 10 und das Sensormittel 20 angeordnet sind. Das Gehäuse 60 kann wenigstens eine für die emittierte Strahlung 12 und die reflektierte Strahlung 22 (siehe Figs. 7 bis 9) transluzente Abdeckung 62 aufweisen. Bei dieser Ausführungsform ist die transluzente Abdeckung 62 zweigeteilt, wobei eine Teilung über ein Teilungsmittel 64 erfolgt. Zudem ist eine Teilung als ein zwischen dem Strahlungsmittel 10 und dem Sensormittel 20 vorgesehenes und die emittierende Strahlung und/oder reflektierende Strahlung blockierendes Trennmittel 66, optional umfassend wenigstens eine Trennwand, ausgebildet.

Die Vorrichtung 1 umfasst weiter ein Montagemittel 50, über das die Vorrichtung 1 seitlich 5 an dem Solarmodul 4 befestigbar ist. Bei dieser Ausführungsform erfolgt die Befestigung optional oberhalb und außerhalb der solarenergetisch aktiven Fläche, hier der Oberfläche 2 des Solarmoduls 4. Zudem erfolgt die Befestigung am Rahmen 5 des Solarmoduls und insbesondere seitlich des Rahmens 5 und oberhalb dieses Rahmens 5.

Das Montagemittel 50 ist so ausgebildet, dass es über einen Adapter 54, der am Solarmodul 4 bzw. an seinem Rahmen 52 ausgebildet ist, befestigt werden kann und insbesondere darin eingesteckt werden kann. Dazu weist die Vorrichtung 1 bzw. das Montagemittel 50 eine Ausnehmung 56 auf, die in eine komplementäre Nut oder dergleichen Aufnahme (nicht dargestellt) am Solarmodul 4 einsteckbar oder dergleichen befestigbar ist oder umgekehrt.

Die Vorrichtung 1 ist optional so ausgebildet, dass die Befestigung des Montagemittels 50 am Solarmodul 4 zu einer optimal ausgerichteten Positionierung, insbesondere der Emissionsachse und Detektionsachse von Strahlungsmittel 10 und Sensormittel 20, führt. Dies garantiert die fehlerfreie Montage und somit den Betrieb der Vorrichtung 1. Das Montagemittel erlaubt optional eine Feinjustierung der Positionierung bzw. Ausrichtung.

Optional ist das Strahlungsmittel 10 derart ausgebildet und angeordnet, dass die emittierte Strahlung 12 parallel zu einer Längsachse A_{L} des Solarmoduls 4 und/oder senkrecht und/oder orthogonal zu einem auf dem Solarmodul 4 ausgebildeten Streifenmuster 7 auf den Teilbereich 6 auftritt (siehe insbesondere Figs. 1 und 2). Die Längsachse A_{L} des Solarmoduls ist bei dieser Ausführungsform in Zeichnungsebene von rechts unten nach links oben dargestellt. Die Längsachse A_{L} des Solarmoduls kann aber auch um 90° dazu verschwenkt definiert werden.

Die Figs. 7 bis 9 zeigen die erfindungsgemäße Vorrichtung gemäß Fig. 1 schematisch in einem Betriebszustand. Dargestellt sind insbesondere die emittierte Strahlung 12 und die reflektierte bzw. detektierte Strahlung 22.

Das Strahlungsmittel ist optional derart ausgebildet, dass es die emittierte Strahlung 12 in Form eines Emissionskegels 14 emittiert (siehe Figs. 7 - 9). Zudem ist es möglich, dass das Sensormittel 20 derart ausgebildet ist, dass es die reflektierte Strahlung 22 innerhalb eines Detektionskegels 24 detektiert. Die Detektionskegel können unterschiedlich sein, wobei optional der Emissionskegel 14 einen größeren Streuwinkel γ₁ als der Detektionskegel 24 mit seinem Streuwinkel γ₂ aufweist.

Es ist denkbar, dass das Strahlungsmittel 10 und das Sensormittel 20 relativ zueinander unter Bildung eines Überlappungsbereichs 40 der emittierten Strahlung 12 und der reflektierten Strahlung 22 im Teilbereich 6 ausgebildet und angeordnet sind. Ein solcher Überlappungsbereich ist ebenfalls in den Figs. 7 und 9 dargestellt, wobei er aus der Relativanordnung von Strahlungsmittel 10 und Sensormittel 20 reflektiert. Es ist insbesondere in diesem Zusammenhang denkbar, dass die Emissionsachse A_{E} des Strahlungsmittels 10 in einem Winkel α von 10° bis 20°, optional 13° bis 17°, zur Detektionsachse A_{D} des Sensormittels 20 geneigt ist. Optional laufen also die beiden Achsen, Emissionsachse A_{E} und Detektionsachse A_{D}, im Winkel α aufeinander zu. Die emittierte Strahlung 12 kann dabei als "Vorwärtsstrahlung" und die reflektierte Strahlung 22 als "Rückwärtsstrahlung" bezeichnet werden.

Das Strahlungsmittel 10 und/oder das Sensormittel 20 sind dabei optional so ausgebildet, dass sich der Teilbereich 6 in einer maximalen Entfernung E_{Max} von 30 cm, optional 20 cm, weiter optional 16 cm, vom Strahlungsmittel 10 und/oder Sensormittel 20 erstreckt. Auch ist es denkbar, dass sich der Teilbereich in einer minimalen Entfernung E_{Min} von 2 cm, optional 10 cm, weiter optional 14 cm, vom Strahlungsmittel 10 und/oder Sensormittel 20 erstreckt. Dies ist in Fig. 7 dargestellt. Der Teilbereich ergibt sich optional durch den Überlappungsbereich 40 der emittierten Strahlung der reflektierten Strahlung. Er kann den gesamten Überlappungsbereich 40 abdecken, optional ist er jedoch kleiner ausgeführt, um im Teilbereich eine gleichmäßige Detektionsstärke zu garantieren und insbesondere Randabsenkungen der Detektionsleistung zu verhindern. Eine entsprechende Eingrenzung kann insbes. softwaregestützt im Auswertemittel 30 erfolgen.

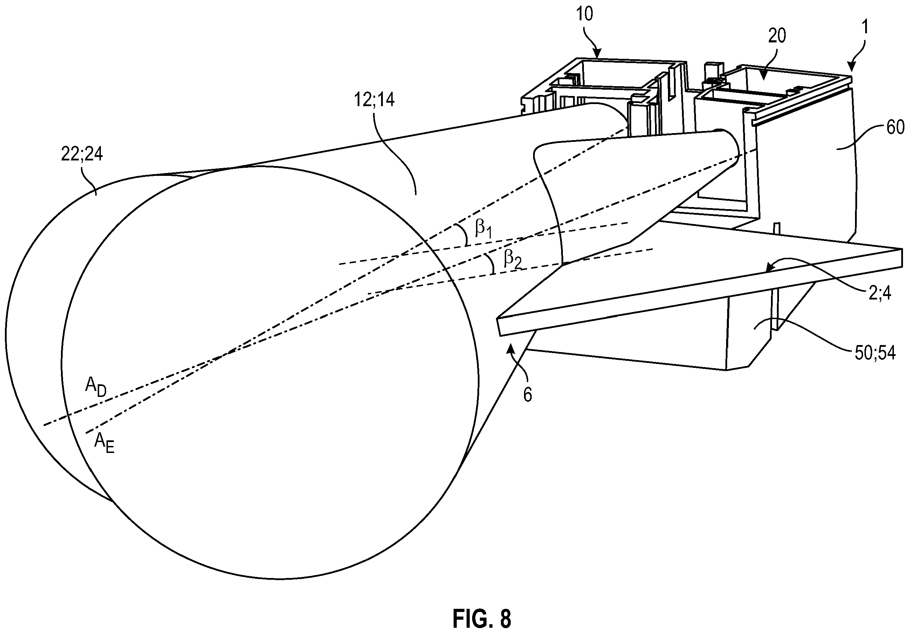

Wie u.a. in Fig. 8 dargestellt, ist das Strahlungsmittel 10 derart ausgebildet oder angeordnet, dass die Emissionsachse A_{E} der emittierten Strahlung 12 in einem Winkel β₁ von 2° bis 15°, optional von 5° bis 10°, und weiter optional von 6° bis 8°, zur Oberfläche 2 des Solarmoduls 4 (nach unten) geneigt ist, und optional so auf den Teilbereich 6 auftrifft. Ähnliches gilt für die

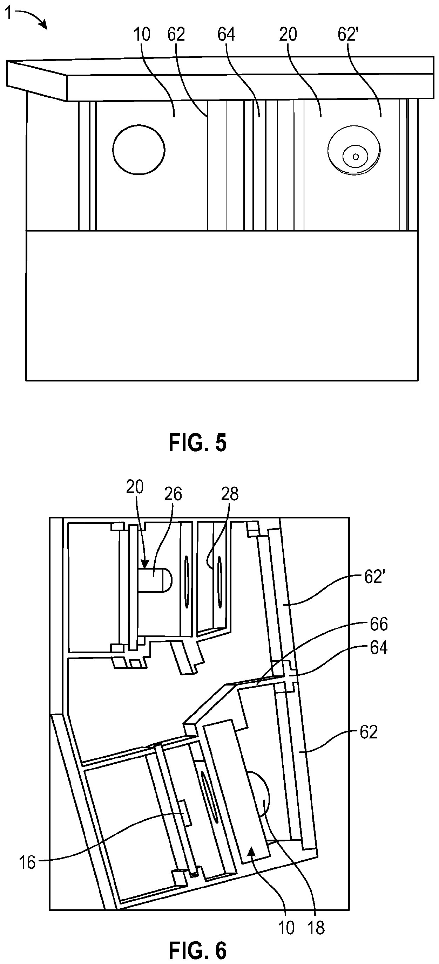

Detektionsachse A_{D} des Sensormittels 20, die in einem Winkel β₂ von 2° bis 15°, optional von 5° bis 10°, und weiter optional von 6° bis 8°, zur Oberfläche 2 des Solarmoduls 4 (nach unten geneigt) angeordnet sein kann. Auf die besonderen Ausführungen des Strahlungsmittels 10, umfassend wenigstens eine LED 16 und insbesondere die Konfektionierung dieser LED, wurde bereits im einleitenden Teil eingegangen, sodass hier lediglich darauf verwiesen wird. Selbiges gilt für die emittierte Strahlung sowie die Ausbildung des Sensormittels wenigstens zur optischen Detektion und insbesondere mit einer Fotodiode 26, wie sie beispielsweise in Fig. 6 dargestellt ist.

### Bezugszeichen:

- 1: Vorrichtung
- 2: Oberfläche
- 4: Solarmodul
- 5: seitlich
- 6: Teilbereich
- 7: Streifenmuster
- 8: Staub- und Schmutzablagerungen
- 10: Strahlungsmittel
- 12: emittierte Strahlung
- 14: Emissionskegel
- 16: LED
- 18: Optik
- 20: Sensormittel
- 22: reflektierte Strahlung
- 24: Detektionskegel
- 26: Fotodiode
- 28: Optik
- 30: Auswertemittel
- 32: Übertragungs- und Empfangsmittel
- 40: Überlappungsbereich
- 50: Montagemittel
- 52: Rahmen
- 54: Adapter
- 56: Ausnehmung
- 60: Gehäuse
- 62: transluzente Abdeckung
- 64: Teilungsmittel
- 66: Trennmittel
- A_{E}: Emissionsachse
- A_{D}: Detektionsachse
- α: Winkel
- β₁, β₂: Winkel
- γ₁, γ₂: Streuwinkel
- E_{Min}: minimale Entfernung
- E_{Max}: maximale Entfernung
- A_{L}: Längsachse des Solarmoduls

## Patentansprüche

1. Vorrichtung zur Ermittlung des Verschmutzungsgrades einer Oberfläche (2) eines insbesondere opaken Solarmodul (4), und insbesondere zur Ermittlung von Staub- und Schmutzablagerungen (8) auf der Oberfläche (2) des Solarmoduls (4),
umfassend:
ein Strahlungsmittel (10), ausgebildet, um eine emittierte Strahlung (12) wenigstens einer definierten Wellenlänge auf wenigstens einen Teilbereich (6) der Oberfläche (2) des Solarmoduls (4) zu emittieren,
ein Sensormittel (20), um von diesem Teilbereich (6) reflektierte Strahlung (22) zu detektieren, und
ein Auswertemittel (30), zur Ermittlung des Verschmutzungsgrades des Teilbereichs (6) aus einem Vergleich zwischen der detektierten reflektierten Strahlung (22) und einer, optional vorher detektierten, reflektierten Normstrahlung, wobei die reflektierte Normstrahlung durch das Emittieren einer zur obigen emittierten Strahlung (12) identischen Normstrahlung auf den Teilbereich in wenigstens einem Normzustand des Teilbereiches,
insbesondere einem Zustand mit 1% geringer erzielbarer Leistung des Solarmoduls (4) und/oder einem nicht verschmutzten Zustand, optional mit 100% erzielbarer Leistung des Solarmoduls (4), und der Detektion der dabei resultierenden reflektierten Strahlung ermittelt wird,
wobei das Strahlungsmittel und das Sensormittel so ausgebildet sind, dass ein wesentlicher Teil der emittierten Strahlung vom Sensormittel weg auf den Teilbereich der Solarmoduloberfläche gerichtet wird, während die, an den, die Staub- und Schmutzablagerungen maßgeblich verursachenden, auf dem Teilbereich des Solarmoduls abgelagerten Partikel reflektierte Strahlung, auf das Sensormittel zurückgeworfen wird,
**dadurch gekennzeichnet, dass** die durch das Sensormittel (20) zu detektierende reflektierte Strahlung (22) eine Mie-Strahlung ist, und das Sensormittel (20) zur Detektion derselben ausgebildet ist, wobei
das Strahlungsmittel derart ausgebildet und angeordnet ist, dass die Emissionsachse A_{E} der emittierten Strahlung, in einem Winkel β₁ von 2° bis 15°, optional 5° bis 10°, und weiter optional von 6° bis 8°, zur Oberfläche des Solarmoduls geneigt ist, und, dass das Sensormittel derart ausgebildet und
angeordnet ist, dass seine Detektionsachse A_{D} in einem Winkel β₂ von 2° bis 15°, optional von 5° bis 10°, und weiter optional von 6° bis 8°, zur Oberfläche des Solarmoduls geneigt ist.

2. Vorrichtung nach Anspruch 1,
**dadurch gekennzeichnet, dass** ein Montagemittel (50) an der Vorrichtung (1) vorgesehen oder befestigbar ist, über das die Vorrichtung (1) seitlich (5) an einem Solarmodul (4), optional oberhalb und außerhalb einer solarenergetisch aktiven Fläche, und weiter optional oberhalb eines Rahmens (7) des Solarmoduls (4) anordbar ist.

3. Vorrichtung nach einem der vorhergehenden Ansprüche,
**dadurch gekennzeichnet, dass** das Strahlungsmittel (10) und das Sensormittel (20) in einem gemeinsamen Gehäuse (60) angeordnet sind.

4. Vorrichtung nach einem der vorhergehenden Ansprüche,
**dadurch gekennzeichnet, dass** das Strahlungsmittel (10) derart ausgebildet ist, dass es die emittierte Strahlung (12) in Form eines Emissionskegels (14) emittiert, und/oder das Sensormittel (20) derart ausgebildet ist, dass es die reflektierte Strahlung (22) innerhalb eines Detektionskegels (24) detektiert.

5. Vorrichtung nach einem der vorhergehenden Ansprüche,
**dadurch gekennzeichnet, dass** das Strahlungsmittel (10) und das Sensormittel (20) relativ zueinander unter Bildung eines Überlappungsbereiches (40) der emittierten Strahlung (12) und der reflektierten Strahlung (22) im Teilbereichs (6) ausgebildet und angeordnet sind, und optional derart, dass die Emissionsachse A_{E} des Strahlungsmittel (10) in einem Winkel α von 10° - 20°, optional 13° - 17°, zur Detektionsachse A_{D} des Sensormittels (20) geneigt ist.

6. Vorrichtung nach einem der vorhergehenden Ansprüche,
**dadurch gekennzeichnet, dass** das Strahlungsmittel (10) und/oder das Sensormittel (20) derart aus gebildet sind, dass sich der Teilbereich (6) in einer maximalen Entfernung (E_{Max}) von 30 cm, optional 20 cm, weiter optional 16 cm, und einer minimalen Entfernung (E_{Min}) von 2 cm, optional 10 cm, weiter optional 14 cm vom Strahlungsmittel (10) und/oder Sensormittel (20) erstreckt.

7. Vorrichtung nach einem der vorhergehenden Ansprüche,
**dadurch gekennzeichnet, dass** das Gehäuse (60) wenigstens eine für die emittierte Strahlung (12) und die reflektierte Strahlung (22) transluzente Abdeckung (62) aufweist, wobei für die emittierte Strahlung (12) und die reflektierte Strahlung (22) je wenigstens eine, gegenseitig durch ein Teilungsmittel (64) separierte Abdeckung (62), vorgesehen ist.

8. Vorrichtung nach einem der vorhergehenden Ansprüche,
**dadurch gekennzeichnet, dass** das Strahlungsmittel (10) wenigstens eine Strahlungsquelle in Form einer LED (16) umfasst, und optional eine LED mit einer maximalen Strahldivergenz von 10°, und/oder einer Ausgangsleistung von 40 - 60 mW und/oder wenigstens einer maximalen Betriebstemperatur von 150°C.

9. Vorrichtung nach einem der vorhergehenden Ansprüche,
**dadurch gekennzeichnet, dass** das Strahlungsmittel (10) wenigstens eine Strahlungsquelle mit wenigstens einer der folgenden Konfigurationen umfasst, wobei eine Abweichung um +/-10% vorliegen kann:
• 645 nm (HRE-hyper red beam, sichtbarer Wellenlängenbereich, rote Farbe); oder
• 855 nm (NIS-near infrared beam, nah-infraroter Wellenlängenbereich, unsichtbar für Menschen); oder
• 945 nm (MIS-mid infrared beam, mittel-infraroter Wellenlängenbereich, unsichtbar für Menschen).

10. Vorrichtung nach einem der vorhergehenden Ansprüche,
**dadurch gekennzeichnet, dass** das Sensormittel (20) wenigstens zur optischen Detektion ausgebildet ist, und optional wenigstens eine Fotodiode (26) umfasst, optional mit wenigstens einer der folgenden Konfigurationen, wobei eine Abweichung um +/- 10% vorliegen kann:
• Sensorfläche 2,65 mm², Empfindlichkeit 0,62 A/W, maximale Empfindlichkeit bei 920 nm; oder
• Sensorfläche 2,65 mm², Empfindlichkeit 0,65 AIW, spektrale Empfindlichkeit nur im Infrarot-Bereich 730 nm bis 1100 nm; maximale Empfindlichkeit bei 880 nm, Tageslicht-Filter.

11. Vorrichtung nach einem der vorhergehenden Ansprüche,
**dadurch gekennzeichnet, dass**
das Sensormittel (20) eine Optik (28) und/oder das Strahlungsmittel (10) eine Optik (18) umfasst, wenigstens umfassend
eine Sammellinse, weiter optional wenigstens eine Bikonvex-Linse, insbesondere mit einer Fokuslänge von 12 - 22 mm, optional 16 - 18 mm, und/oder einer numerischen Apertur von N_{A}= 0,469 bei einem Außendurchmesser von 18 mm, wobei eine Abweichung um +/- 10% vorliegen kann.

12. Verfahren zur Ermittlung des Verschmutzungsgrades einer Oberfläche (2) eines insbesondere opaken Solarmoduls (4), und insbesondere zur Ermittlung von Staub- und Schmutzablagerungen (8) auf der Oberfläche (2) des Solarmoduls (4),
umfassend die folgenden Schritte:
• Emittieren einer emittierten Strahlung (12) mit wenigstens einer definierten Wellenlänge auf wenigstens einen Teilbereich (6) der Oberfläche (2) des Solarmoduls (4) mittels eines Strahlungsmittels (10);
• Detektieren einer von diesem Teilbereich (6) reflektierten Strahlung (22) mittels eines Sensormittels (20); und
• Ermitteln des Verschmutzungsgrades des Teilbereichs (6) aus einem Vergleich zwischen der detektierten reflektierten Strahlung (22) und einer, optional vorher detektierten, reflektierten Normstrahlung, und einer, optional vorher detektierten, reflektierten Normstrahlung, wobei die reflektierte Normstrahlung durch das Emittieren einer zur obigen emittierten Strahlung (12) identischen Normstrahlung auf den Teilbereich in wenigstens einem Normzustand des Teilbereiches, insbesondere einem Zustand mit 1%ger geringer erzielbarer Leistung des Solarmoduls (4) und/oder einem nicht verschmutzten Zustand mit 100%er erzielbarer Leistung des Solarmoduls (4), und der Detektion der dabei resultierenden reflektierten Strahlung ermittelt wird, und wobei
die durch das Sensormittel (20) zu detektierende reflektierte Strahlung (22) eine Mie-Strahlung ist, und das Sensormittel (20) zur Detektion derselben ausgebildet ist, wobei
das Strahlungsmittel derart ausgebildet und angeordnet ist, dass die Emissionsachse A_{E} der emittierten Strahlung, in einem Winkel β₁ von 2° bis 15°, optional 5° bis 10°, und weiter optional von 6° bis 8°, zur Oberfläche des Solarmoduls geneigt ist, und, dass das Sensormittel derart ausgebildet und angeordnet ist, dass seine Detektionsachse A_{D} in einem Winkel β₂ von 2° bis 15°, optional von 5° bis 10°, und weiter optional von 6° bis 8°, zur Oberfläche des Solarmoduls geneigt ist, wobei das Strahlungsmittel und das Sensormittel so ausgebildet sind, dass ein wesentlicher Teil der emittierten Strahlung vom Sensormittel weg auf den Teilbereich der Solarmoduloberfläche gerichtet wird, während die, an den, die Staub- und Schmutzablagerungen maßgeblich verursachenden, auf dem Teilbereich des Solarmoduls abgelagerten Partikel reflektierte Strahlung, auf das Sensormittel zurückgeworfen wird.

## Claims

1. Device for determining the degree of soiling of a surface (2) of a solar module (4), in particular an opaque solar module, and in particular for determining dust and dirt deposits (8) on the surface (2) of the solar module (4), comprising:
a radiation means (10), configured to emit an emitted radiation (12) of at least one defined wavelength onto at least a partial area (6) of the surface (2) of the solar module (4),
a sensor means (20) to detect radiation (22) reflected by this partial area (6), and
an evaluation means (30) for determining the degree of soiling of the partial area (6) from a comparison between the detected reflected radiation (22) and
a reflected standard radiation, optionally detected beforehand, wherein the reflected standard radiation is determined by the emission of a standard radiation identical to the above emitted radiation (12) onto the partial area in at least one standard state of the partial area, in particular a state with 1% lower attainable output of the solar module (4) and/or a non-soiled state, optionally with 100% attainable output of the solar module (4), and the detection of the reflected radiation resulting thereby,
wherein the radiation means and the sensor means are configured so that a substantial portion of the emitted radiation is directed by the sensor means away onto the partial area of the solar module surface, while the radiation reflected at the particles deposited on the partial area of the solar module that substantially cause the dust and dirt deposits is reflected back onto the sensor means,
**characterised in that**
the reflected radiation (22) to be detected by the sensor means (20) is Mie radiation, and the sensor means (20) is configured to detect the same,
wherein
the radiation means is configured and arranged so that the emission axis A_{E} of the emitted radiation is inclined at an angle β₁ of 2° to 15°, optionally of 5° to 10°, and further optionally of 6° to 8°, to the surface of the solar module, and that the sensor means is configured and arranged so that its detection axis A_{D} is inclined at an angle β₂ of 2° to 15°, optionally of 5° to 10°, and further optionally of 6° to 8°, to the surface of the solar module.

2. Device according to claim 1, **characterised in that** provided on or attachable to the device (1) is a mounting means (50), by way of which the device (1) can be arranged laterally (5) on a solar module (4), optionally above and outside of a solar-energetically active surface, and further optionally above a frame (7) of the solar module (4).

3. Device according to one of the preceding claims, **characterised in that** the radiation means (10) and the sensor means (20) are arranged in a common housing (60).

4. Device according to any one of the preceding claims, **characterised in that** the radiation means (10) is configured so that it emits the emitted radiation (12) in the form of an emission cone (14), and/or the sensor means (20) is configured so that it detects the reflected radiation (22) inside a detection cone (24).

5. Device according to any one of the preceding claims, **characterised in that** the radiation means (10) and the sensor means (20) are configured and arranged relative to one another with the formation of an overlapping area (40) of the emitted radiation (12) and the reflected radiation (22) in the partial area (6) and optionally so that the emission axis A_{E} of the radiation means (10) is inclined at an angle of 10° - 20°, optionally 13° - 17°, to the detection axis A_{D} of the sensor means (20).

6. Device according to any one of the preceding claims, **characterised in that** the radiation means (10) and/or the sensor means (20) are configured so that the partial area (6) extends at a maximum distance (E_{Max}) of 30 cm, optionally 20 cm, further optionally 16 cm, and a minimum distance (E_{Min}) of 2 cm, optionally 10 cm, further optionally 14 cm from the radiation means (10) and/or sensor means (20).

7. Device according to any one of the preceding claims, **characterised in that** the housing (60) has at least one translucent cover (62) for the emitted radiation (12) and the reflected radiation (22), wherein at least one cover (62) respectively, separated from each other by a dividing means (64), is provided for the emitted radiation (12) and the reflected radiation (22).

8. Device according to any one of the preceding claims, **characterised in that** the radiation means (10) comprises at least one radiation source in the form of an LED (16), and optionally an LED with a maximum beam divergence of 10°, and/or a power output of 40 - 60 mW and/or at least a maximum operating temperature of 150°C.

9. Device according to any one of the preceding claims, **characterised in that** the radiation means (10) comprises at least one radiation source with at least one of the following configurations, wherein a deviation of +/- 10% can exist:
• 645 nm (HRE-hyper red beam, visible wavelength range, red colour); or
• 855 nm (NIS-near infrared beam, near infrared wavelength range, invisible to humans); or
• 945 nm (MIS-mid infrared beam, mid-infrared wavelength range, invisible to humans).

10. Device according to any one of the preceding claims, **characterised in that** the sensor means (20) is configured for at least optical detection, and optionally comprises at least one photodiode (26), optionally with at least one of the following configurations, wherein a deviation of +/- 10% can exist:
• sensor surface 2.65 mm², sensitivity 0.62 A/W, maximum sensitivity at 920 nm; or
• sensor surface 2.65 mm², sensitivity 0.65 AW; spectral sensitivity only in infrared range 730 nm to 1100 nm; maximum sensitivity at 880 nm, daylight filter.

11. Device according to any one of the preceding claims, **characterised in that** the sensor means (20) comprises an optical system (28) and/or the radiation means (10) comprises an optical system (18), comprising at least one converging lens, further optionally at least one biconvex lens, in particular with a focus length of 12 - 22 mm, optionally 16 - 18 mm,
and/or a numerical aperture of N_{A}=0.469 at an outer diameter of 18 mm, wherein a deviation of +/- 10% can exist.

12. Method for determining the degree of soiling of a surface (2) of a solar module (4), in particular an opaque solar module, and in particular for determining dust and dirt deposits (8) on the surface (2) of the solar module (4), comprising the following steps:
• emitting an emitted radiation (12) with at least one defined wavelength onto at least a partial area (6) of the surface (2) of the solar module (4) by means of a radiation means (10);
• detecting radiation (22) reflected by this partial area (6) by means of a sensor means (20); and
• determining the degree of soiling of the partial area (6) from a comparison between the detected reflected radiation (22) and a reflected standard radiation, optionally detected beforehand, wherein
the reflected standard radiation is determined by the emission of a standard radiation identical to the above emitted radiation (12) onto the partial area in at least one standard state of the partial area, in particular a state with 1% lower attainable output of the solar module (4) and/or a non-soiled state with 100% attainable output of the solar module (4), and the detection of the reflected radiation resulting thereby, and wherein
the reflected radiation (22) to be detected by the sensor means (20) is Mie radiation, and the sensor means (20) is configured to detect the same, wherein
the radiation means is configured and arranged so that the emission axis A_{E} of the emitted radiation is inclined at an angle β₁ of 2° to 15°, optionally of 5° to 10°, and further optionally of 6° to 8°, to the surface of the solar module, and that the sensor means is configured and arranged so that its detection axis A_{D} is inclined at an angle β₂ of 2° to 15°, optionally of 5° to 10°, and further optionally of 6° to 8°, to the surface of the solar module, wherein the radiation means and the sensor means are configured so that a substantial portion of the emitted radiation is directed by the sensor means away onto the partial area of the solar module surface, while the radiation reflected at the particles deposited on the partial area of the solar module that substantially cause the dust and dirt deposits is reflected back onto the sensor means.

## Revendications

1. Dispositif pour déterminer le degré d'encrassement d'une surface (2) d'un module solaire (4) notamment opaque, et notamment pour déterminer les dépôts de poussière et de saleté (8) sur la surface (2) du module solaire (4), comprenant :
un moyen de rayonnement (10), configuré pour émettre un rayonnement émis (12) d'au moins une longueur d'onde définie sur au moins une zone partielle (6) de la surface (2) du module solaire (4),
un moyen de détection (20), pour détecter le rayonnement (22) réfléchi par cette zone partielle (6), et
un moyen d'évaluation (30), pour déterminer le degré d'encrassement de la zone partielle (6) à partir d'une comparaison entre le rayonnement réfléchi détecté (22) et un rayonnement normalisé réfléchi, éventuellement détecté auparavant, le rayonnement normalisé réfléchi étant déterminé par l'émission d'un rayonnement normalisé identique au rayonnement émis (12) ci-dessus sur la zone partielle dans au moins un état normalisé de la zone partielle,
notamment un état avec 1 % de puissance réalisable en moins du module solaire (4) et/ou un état non encrassé, éventuellement avec 100 % de puissance réalisable du module solaire (4), et la détection du rayonnement réfléchi qui en résulte,
le moyen de rayonnement et le moyen de détection étant configurés de telle sorte qu'une partie importante du rayonnement émis est dirigée par le moyen de détection à l'écart de la zone partielle de la surface du module solaire,
tandis que le rayonnement réfléchi par les particules déposées sur la zone partielle du module solaire, qui provoquent de manière déterminante les dépôts de poussière et de saleté, est renvoyé sur le moyen de détection,
**caractérisé en ce que**
le rayonnement réfléchi (22) à détecter par le moyen de détection (20) est un rayonnement de Mie, et le moyen de détection (20) est configuré pour le détecter,
le moyen de rayonnement étant configuré et agencé de telle sorte que l'axe d'émission A_{E} du rayonnement émis est orienté selon un angle β₁ de 2° à 15°,
éventuellement de 5° à 10°, et en outre éventuellement de 6° à 8°, par rapport à la surface du module solaire, et **en ce que** le moyen de détection est configuré et agencé de telle sorte que son axe de détection A_{D} est incliné d'un angle β₂ de 2° à 15°, éventuellement de 5° à 10°, et en outre éventuellement de 6° à 8°, par rapport à la surface du module solaire.

2. Dispositif selon la revendication 1, **caractérisé en ce qu'**il est prévu ou peut être fixé au dispositif (1) un moyen de montage (50) par l'intermédiaire duquel le dispositif (1) peut être agencé latéralement (5) sur un module solaire (4), éventuellement au-dessus et à l'extérieur d'une surface active du point de vue de l'énergie solaire, et en outre éventuellement au-dessus d'un cadre (7) du module solaire (4).

3. Dispositif selon l'une quelconque des revendications précédentes, **caractérisé en ce que** le moyen de rayonnement (10) et le moyen de détection (20) sont agencés dans un boîtier commun (60).

4. Dispositif selon l'une quelconque des revendications précédentes, **caractérisé en ce que** le moyen de rayonnement (10) est configuré pour émettre le rayonnement émis (12) sous la forme d'un cône d'émission (14) et/ou le moyen de détection (20) est configuré pour détecter le rayonnement réfléchi (22) à l'intérieur d'un cône de détection (24).

5. Dispositif selon l'une quelconque des revendications précédentes, en ce que le moyen de rayonnement (10) et le moyen de détection (20) sont configurés et agencés l'un par rapport à l'autre en formant une zone de chevauchement (40) du rayonnement émis (12) et du rayonnement réfléchi (22) dans la zone partielle (6), et éventuellement de telle sorte que l'axe d'émission A_{E} du moyen de rayonnement (10) est incliné d'un angle α de 10° à 20°, éventuellement de 13° à 17°, par rapport à l'axe de détection A_{D} du moyen de détection (20).

6. Dispositif selon l'une quelconque des revendications précédentes, **caractérisé en ce que** le moyen de rayonnement (10) et/ou le moyen de détection (20) sont configurés de telle sorte que la zone partielle (6) s'étend à une distance maximale (Eₘₐₓ) de 30 cm, éventuellement 20 cm, en outre éventuellement 16 cm, et à une distance minimale (Eₘᵢₙ) de 2 cm, éventuellement 10 cm, en outre éventuellement 14 cm du moyen de rayonnement (10) et/ou du moyen de détection (20).

7. Dispositif selon l'une quelconque des revendications précédentes, **caractérisé en ce que** le boîtier (60) comprend au moins un couvercle (62) translucide pour le rayonnement émis (12) et le rayonnement réfléchi (22), au moins un couvercle (62) séparé mutuellement par un moyen de séparation (64) étant prévu pour le rayonnement émis (12) et le rayonnement réfléchi (22).

8. Dispositif selon l'une quelconque des revendications précédentes, **caractérisé en ce que** le moyen de rayonnement (10) comprend au moins une source de rayonnement sous la forme d'une LED (16), et éventuellement une LED ayant une divergence de faisceau maximale de 10°, et/ou une puissance de sortie de 40 à 60 mW et/ou au moins une température de fonctionnement maximale de 150 °C.

9. Dispositif selon l'une quelconque des revendications précédentes, **caractérisé en ce que** le moyen de rayonnement (10) comprend au moins une source de rayonnement ayant au moins l'une des configurations suivantes, une variation de +/- 10 % pouvant être présente :
• 645 nm (HRE-hyper red beam, plage de longueurs d'onde visible, couleur rouge) ; ou
• 855 nm (NIS-near infrared beam, plage de longueurs d'onde infrarouge proche, invisible pour les humains) ; ou
• 945 nm (MIS-mid infrared beam, plage de longueurs d'onde infrarouge moyen, invisible pour les humains).

10. Dispositif selon l'une quelconque des revendications précédentes, **caractérisé en ce que** le moyen de détection (20) est au moins configuré pour la détection optique, et comprend éventuellement au moins une photodiode (26), éventuellement avec au moins l'une des configurations suivantes, une variation de +/- 10 % pouvant être présente :
• surface de détection 2,65 mm², sensibilité 0,62 A/W, sensibilité maximale à 920 nm ; ou
• surface de détection 2,65 mm², sensibilité 0,65 A/W ; sensibilité spectrale uniquement dans la plage infrarouge 730 nm à 1 100 nm ; sensibilité maximale à 880 nm, filtre de lumière du jour.

11. Dispositif selon l'une quelconque des revendications précédentes, **caractérisé en ce que** le moyen de détection (20) comprend une optique (28) et/ou le moyen de rayonnement (10) comprend une optique (18) comprenant au moins une lentille convergente, en outre éventuellement au moins une lentille biconvexe, notamment avec une longueur focale de 12 à 22 mm, éventuellement de 16 à 18 mm, et/ou une ouverture numérique de N_{A} = 0,469 pour un diamètre extérieur de 18 mm, une variation de +/- 10 % pouvant être présente.

12. Procédé pour déterminer le degré d'encrassement d'une surface (2) d'un module solaire (4), notamment opaque, et notamment pour déterminer les dépôts de poussière et de saleté (8) sur la surface (2) du module solaire (4), comprenant les étapes suivantes :
• l'émission d'un rayonnement émis (12) avec au moins une longueur d'onde définie sur au moins une zone partielle (6) de la surface (2) du module solaire (4) au moyen d'un moyen de rayonnement (10) ;
• la détection d'un rayonnement (22) réfléchi par cette zone partielle (6) au moyen d'un moyen de détection (20) ; et
• la détermination du degré d'encrassement de la zone partielle (6) à partir d'une comparaison entre le rayonnement réfléchi détecté (22) et un rayonnement normalisé réfléchi, éventuellement détecté au préalable, et un rayonnement normalisé réfléchi, éventuellement détecté au préalable, le rayonnement normalisé réfléchi étant déterminé par l'émission d'un rayonnement normalisé identique au rayonnement émis (12) ci-dessus sur la zone partielle dans au moins un état normalisé de la zone partielle, notamment un état avec 1 % de puissance réalisable en moins du module solaire (4) et/ou un état non encrassé, éventuellement avec 100 % de puissance réalisable du module solaire (4), et la détection du rayonnement réfléchi qui en résulte, et
le rayonnement réfléchi (22) à détecter par le moyen de détection (20) étant un rayonnement de Mie, et le moyen de détection (20) étant configuré pour le détecter,
le moyen de rayonnement étant configuré et agencé de telle sorte que l'axe d'émission A_{E} du rayonnement émis est incliné d'un angle β₁ de 2° à 15°, éventuellement de 5° à 10°, et en outre éventuellement de 6° à 8°, par rapport à la surface du module solaire, et le moyen de détection étant configuré et agencé de telle sorte que son axe de détection A_{d} est incliné d'un angle β₂ de 2° à 15°, éventuellement de 5° à 10°, et en outre éventuellement de 6° à 8°, par rapport à la surface du module solaire, le moyen de rayonnement et le moyen de détection étant configurés de telle sorte qu'une partie importante du rayonnement émis est dirigée par le moyen de détection à l'écart de la zone partielle de la surface du module solaire, tandis que le rayonnement réfléchi par les particules déposées sur la zone partielle du module solaire, qui provoquent de manière déterminante les dépôts de poussière et de saleté, est renvoyé sur le moyen de détection.
